# EUROPEAN PATENT SPECIFICATION

(11) **EP 2 903 351 B1**
(45) Date of publication and mention of the grant of the patent: **17.08.2022**
(21) Application number: 13841003.0
(22) Date of filing: 26.08.2013
(51) Int. Cl.: H04W 52/02

(54) **USER EQUIPMENT AND RADIO BASE STATION**
BENUTZERGERÄT UND FUNKBASISSTATION
ÉQUIPEMENT UTILISATEUR ET STATION DE BASE RADIO

(30) Priority: 28.09.2012 JP 2012216257
(43) Date of publication of application: 05.08.2015
(73) Proprietor: NTT DOCOMO, INC., Chiyoda-ku Tokyo 100-6150 (JP)
(72) Inventor: UCHINO, Tooru, Tokyo 100-6150 (JP); KIYOSHIMA, Kohei, Tokyo 100-6150 (JP)
(74) Representative: Hoffmann Eitle
(86) International application number: PCT/JP2013/072649
(87) International publication number: WO 2014/050395

(56) References cited:
- WO-A1-2008/133309
- KR-A- 20110 036 518
- US-A1- 2009 232 054
- US-A1- 2012 014 304
- CHINA UNICOM: 'Consideration on DRX Configuration for Background Traffic' 3GPP TSG-RAN WG2 MEETING #77BIS, R2-121429 19 March 2012, pages 1 - 2, XP050605982
- ETRI: 'DRX operation for LTE-Advanced UE' 3GPP TSG RAN WG2 #68, R2-096510 03 November 2009, pages 1 - 3, XP050391097

## Description

### TECHNICAL FIELD

The present invention relates to a mobile station.

### BACKGROUND ART

According to the specifications of LTE (Long Term Evolution) and LTE-Advanced, control to transition a mobile station UE in an "RRC_Connected state" to a DRX (Discontinuous Reception) state can be performed with a view to battery saving of the mobile station UE.

Specifically, the mobile station UE in the DRX state transitions between an Active state and an Inactive state.

Here, the mobile station UE in the Active state monitors a PDCCH (Physical Downlink Control Channel) and reports, to a radio base station eNB, feedback information such, for example, as CQI (Channel Quality Indicator), PMI (Precoding Matrix Index), RI (Rank Indicator), and PTI (Precoding Type Indicator).

On the other hand, the mobile station UE in the Inactive state does not monitor a PDCCH nor reports the feedback information to a radio base station eNB. Thus, the battery saving of the mobile station UE can be achieved.

The mobile station UE is turned into the Active state in any one of following cases, or is turned into the Inactive state in any case other than them:

- a case where any one of "On duration timer, " "drx-InactivityTimer," "drx-RetransmissionTimer," and "mac-contensionResolutionTimer" is activated;
- a case where a schedule request (Scheduling Request) is transmitted;
- a case where "UL grant" is allocated for retransmitting HARQ (Hybrid ARQ) in the uplink; and
- a case where a downlink control signal to instruct new transmission through a PDCCH is not received after a random access response (Random Access Response) is received

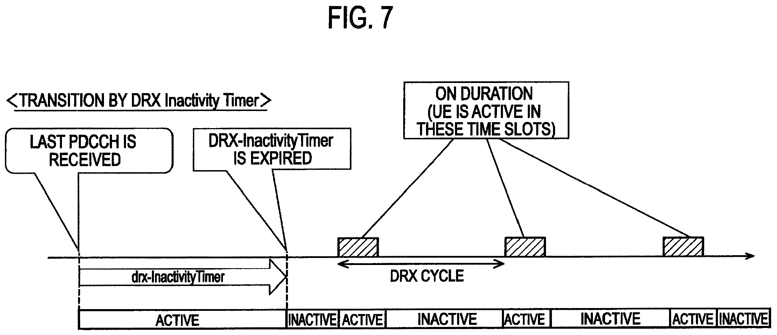

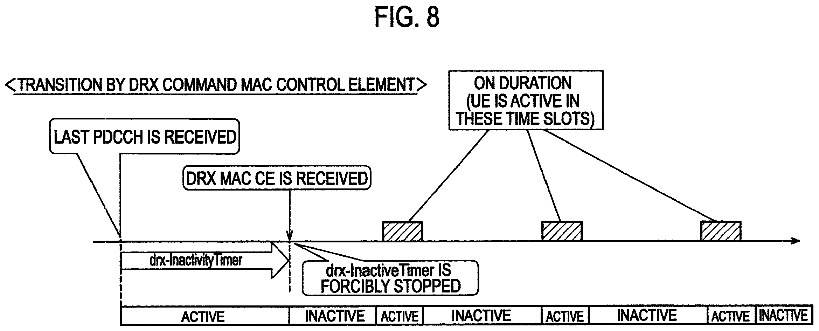

Figs. 7 and 8 illustrate an operation of the mobile station UE which is configured to transition to a DRX state.

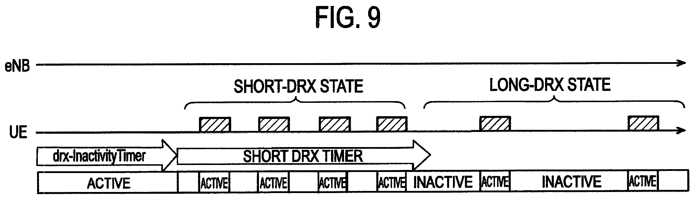

Also, as illustrated in Fig. 9, there are two kinds of DRX states of a Short-DRX state in which discontinuous reception is performed in a Short-DRX cycle and a Long-DRX state in which discontinuous reception is performed in a Long-DRX cycle which is a cycle longer the Short-DRX cycle.

Here, the Short-RDX state is an optional function. In other words, the mobile station UE may be configured to be incapable of transitioning to the Short-DRX state.

Also, the mobile station UE transitions the reception state of the mobile station UE to the Short-DRX state only when the reception state of the mobile station UE is configured to be capable of transitioning to the Short-DRX state under the initiative of the radio base station eNB.

Since the DRX cycle is short in the Short-DRX state, delay to restart data transmission/reception is relatively short, but a battery saving effect is small accordingly.

On the other hand, the Long-DRX state is an essential function. In other words, the mobile station US is allowed to transition to the Long-DRX state whenever the DRX is configured.

Since the DRX cycle is long in the Long-DRX state, delay to restart data transmission/reception is relatively long, but a battery saving effect is large.

For example, in a case where a mobile station UE determines to transition a reception state thereof to a DRX state in response to expiration of "drx-InactivityTimer," reception of "DRX-command MAC-CE (Media Access Control-Control Element) " or the like, the mobile station UE activates the "Short DRX timer" and transitions the reception state of the mobile station UE to the Short-DRX state when the reception state of the mobile station UE is configured to be capable of transitioning to the Short-DRX state under the initiative of the radio base station eNB (in other words, the Short DRX is configured), as illustrated in Fig. 9.

After that, the mobile station UE transitions the reception state of the mobile station UE to the Long-DRX state when the "Short DRX timer" expires.

Such an operation is intended to transition the reception state of the mobile station UE to the Short-DRX state only after the absence of transmission/reception in the mobile station UE is confirmed.

Here, when a mobile station UE determines to transition the reception state thereof to a DRX state, the mobile station UE transitions the reception state of the mobile station UE to the Long-DRX state when the reception state of the mobile station UE is configured to be capable of transitioning to the Short-DRX state under the initiative of the radio base station eNB (in other words, the Short-DRX is not configured).

### PRIOR ART DOCUMENT

### NON-PATENT DOCUMENT

Non-patent document 1: 3GPP TS36.321

US 2012/ 014304 A1 describes methods and an apparatus for controlling discontinuous reception on a mobile device and in particular to control a short discontinuous reception timer in response to the receipt of a medium access control element, wherein the methods and apparatus include stopping, restarting or maintaining the short discontinuous reception timer.

US 2009/232054 A1 shows a wireless transmit/receive unit stopping discontinuous reception timers that are running and that are related to uplink and/or downlink transmissions during a discontinuous reception time period.

KR 2011 0036518 A and US 2016/050628 A1, respectively, describe a method for reducing power consumption of a terminal that communicates with a base station in a mobile communication system using a multi-carrier structure composed of a primary component carrier and at least one secondary component carrier.

CHINA UNICOM: "Consideration on DRX Configuration for Background Traffic", 3GPP TSG-RAN WG2 MEETING #77BIS, R2-121429, 19 March 2012, pages 1-2, XP050605982 proposes a DRX configuration of LTE networks for data applications.

ETRI: "DRX operation for LTE-Advanced UE", 3GPP TSG RAN WG2 #68, R2-096510, 3 November 2009, pages 1-3, XP050391097 proposes to configure one common DRX parameter set for LTE-Advanced UE. It is further proposed that, when the LTE-Advanced UE receives a DRX Command MAC CE, the UE enters into the long DRX directly and it applies to entire component carriers. Further, it is proposed to introduce a new DRX Command MAC CE which indicates the UE enters an individual component carrier into the long DRX.

### SUMMARY OF THE INVENTION

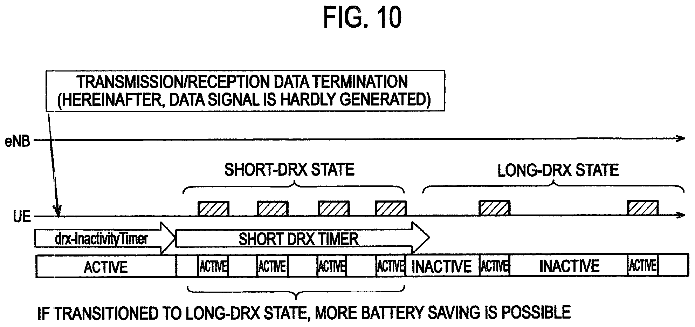

However, in above-described LTE or LTE-Advanced, when a mobile station UE determines to transition the reception state thereof to a DRX state, the mobile station UE needs to transition the reception state thereof to the Short-DRX state once, despite the absence of data to be transmitted/received, if the reception state of the mobile station UE is configured to be capable of transitioning to the Short-DRX state under the initiative of the radio base station eNB (in other words, the Short-DRX is configured) as illustrated in Fig. 10. Accordingly, there is a problem that the DRX state of the mobile station UE cannot be flexibly changed.

Hence, the present invention has been made with a view to the above problem, and an objective of the invention is to provide a mobile station and a radio base station which are capable of making a flexible change in a DRX state of a mobile station UE.

A first feature of the present invention is summarized as a mobile station, including all features of independent claim 1. Further preferred embodiments are defined in the respective dependent claim.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base statin according to the first embodiment of the invention.
[Fig. 3] Fig. 3 is a functional block diagram of a mobile station according to the first embodiment of the invention.
[Fig. 4] Fig. 4 is a diagram illustrating operations of the radio base station and the mobile station according to the first embodiment of the invention.
[Fig. 5] Fig. 5 is a flowchart illustrating an operation of the mobile station according to the first embodiment of the invention.
[Fig. 6] Fig. 6 is a flowchart illustrating an operation of a mobile station according to Modification 1 of the invention.
[Fig. 7] Fig. 7 is a diagram illustrating a conventional art.
[Fig. 8] Fig. 8 is a diagram illustrating the conventional art.
[Fig. 9] Fig. 9 is a diagram illustrating the conventional art.
[Fig. 10] Fig. 10 is a diagram illustrating the conventional art.

### MODE FOR CARRYING OUT THE INVENTION

### (Mobile communication system according to the first embodiment of the invention)

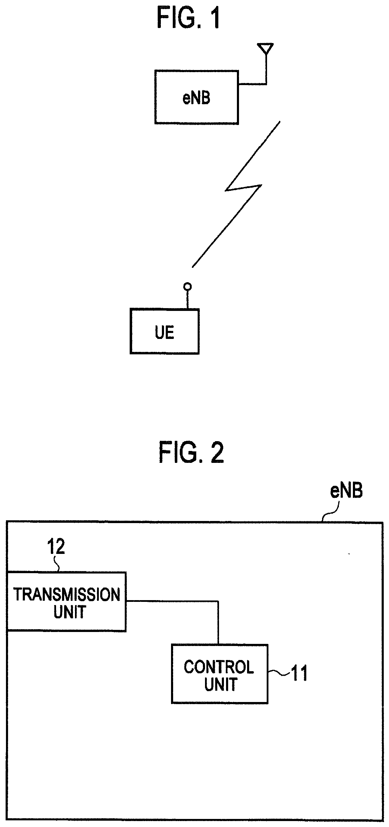

A mobile communication system according to a first embodiment of the present invention is described by referring to Figs. 1 to 5.

The mobile communication system according to the embodiment is an LTE or LTE-Advanced mobile communication system. In an example of Fig. 1, the system includes a radio base station eNB and a mobile station UE in an "RRC_Connected state" in a cell under the radio base station eNB.

Also in the mobile communication system according to the embodiment, the radio base station eNB is configured to be capable of transitioning the mobile station UE to a DRX state by using a RRC (Radio Resource Control) signaling.

As illustrated in Fig. 2, the radio base station eNB according to the embodiment includes a control unit 11 and a transmission unit 12.

The control unit 11 is configured to perform various kinds of controls on the radio base station eNB. For example, the control unit 11 performs control on a mobile station UE in the DRX state or the like.

Specifically, the control unit 11 can transition a reception state of the mobile station UE among a continuous reception state, a Short-DRX state, and a Long-DRX state.

For example, the control unit 11 may determine whether or not the above instruction is made based on at least one of traffic (for example, background traffic or the like) of the mobile station UE and a type of the mobile station UE (for example, whether or not a battery of the mobile station UE does not have a longer life).

Instead, the control unit 11 may determine whether or not the above instruction is made based on information which is transmitted by the mobile station UE (for example, PPI: Power Preference Indication or the like).

The transmission unit 12 is configured to transmit various kinds of signals. For example, the transmission unit 12 transmits a RRC signaling, a MAC-CE, or the like to the mobile station UE.

Specifically, the transmission unit 12 makes an instruction to the mobile station UE to transition the reception state of the mobile station UE by the RRC signaling.

Also, the transmission unit 12 makes an instruction to transition the reception state of the mobile station UE to a Long-DRX state without transitioning it to the Short-DRX state by MAC-CE (hereinafter, Long-DRX MAC-CE) if the reception state of the mobile station UE is the continuous reception state and if the reception state of the mobile station UE is configured to be capable of transitioning to the Short-DRX state.

The Long-DRC MAC-CE is MAC-CE which is newly defined in LTE or LTE-Advanced.

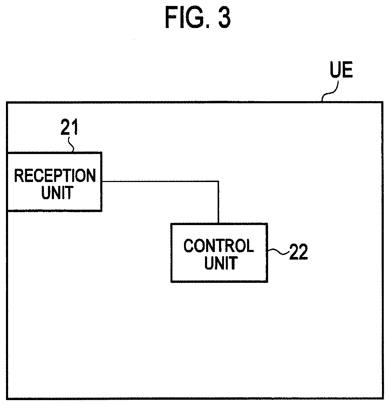

As illustrated in Fig. 3, the mobile station UE according to the embodiment includes a reception unit 21 and a control unit 22.

The reception unit 21 is configured to receive various kinds of signals from the radio base station eNB. For example, the reception unit 21 receives a RRC signaling, MAC-CE, or the like from the radio base station eNB.

The control unit 22 is configured to perform various kinds of controls in the mobile station UE. For example, the control unit 22 performs control on the transition of the reception state of the mobile station UE or the like.

For example, the control unit 22 is configured to manage the reception state of the mobile station UE. Specifically, the control unit 22 manages the reception state of the mobile station UE as any one of the continuous reception state, the Short-DRX state, and the Long-DRX state.

In a case where the reception state of the mobile station UE is managed as a continuous reception state, the control unit 22 transitions the reception state of the mobile station UE to the Short-DRX state when fulfillment of a first condition is detected.

The first condition is assumed to be expiration of "drx-InactivityTimer" or reception of "DRX-command MAC-CE" in the mobile station UE.

Also, in a case where the reception state of the mobile station UE is managed as the Short-DRX state, the control unit 22 transitions the reception state of the mobile station UE to the Long-DRX state when fulfillment of a second condition is detected.

The second condition is assumed to be expiration of "Short DRX timer" or the like.

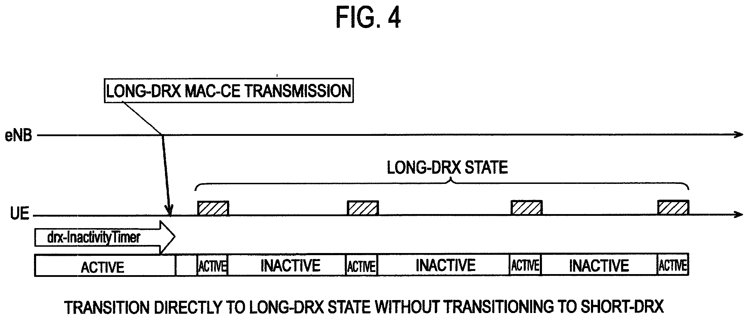

Furthermore, as illustrated in Fig. 4, in a case where the reception state of the mobile station UE is managed as the continuous reception state, and even in a case where the reception state of the mobile station UE is configured to be capable of transitioning to the Short-DRX state (in other words, when the Short-DRX is configured), the control unit 22 transitions the reception state of the mobile station UE to the Long-DRX state without transitioning it to the Short-DRX state when an instruction to transition the reception state of the mobile station UE to the Long-DRX state is made via the Long-DRX MCA-CE by the radio base station eNB.

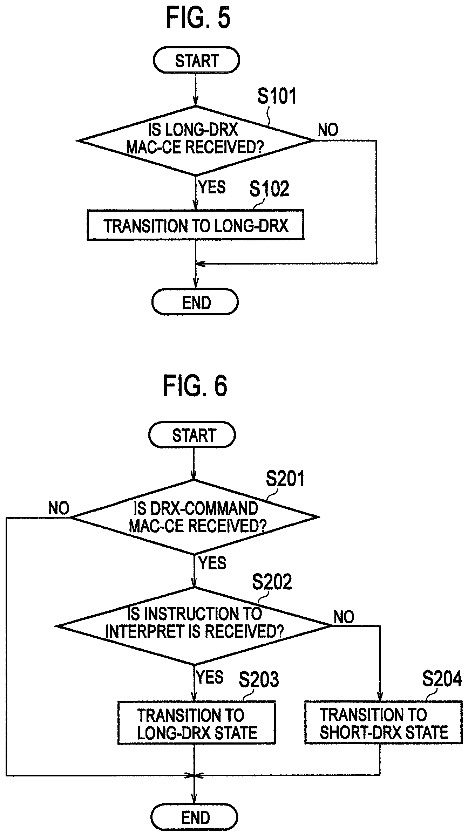

Described hereinafter by referring to Fig. 5 is an operation of the mobile station UE in a case where the reception state of the mobile station UE according to the embodiment is the continuous reception state and in a case where the reception state of the mobile station UE is configured to be capable of transitioning to the Short-DRX state (in other words, when the Short-DRX is configured).

As illustrated in Fig. 5, at step S101, the mobile station UE determines whether or not a Long-DRX MAC-CE is received from the radio base station eNB.

In case of "Yes," the operation proceeds to step S102, while in case of "No," the operation is terminated.

At step S102, the mobile station UE transitions the reception state of the mobile station UE to the Long-DRX state without transitioning it to the Short-DRX state.

In the mobile communication system according to the embodiment, in a case where the reception state of the mobile station UE is managed as a continuous reception state and even in a case where the reception state of the mobile station UE is configured to be capable of transitioning to the Short-DRX state (in other words, the Short-DRX is configured), the reception state of the mobile station UE transitions to the Long-DRX state without transitioning to the Short-DRX state when an instruction to transition the reception state of the mobile station UE to the Long-DRX state is made via the Long-DRX MAC-CE by the radio base station eNB. Accordingly, the DRX state of the mobile station UE can be flexibly changed.

### (Modification 1)

Referring to Fig. 6, a mobile communication system according to Modification 1 of the invention is described by paying attention to differences with the mobile communication system according to the above-described first embodiment.

In the mobile communication system according to Modification 1, in place of the Long-DRX MAC-CE, an existing MAC-CE (for example, DRX-command MAC-CE) is used.

The DRX-command MAC-CE which is defined in the 3GPP TS36.321 is used to transition a mobile station UE to a DRX state and only includes a MAC sub-header (in other words, a payload is not included) . Accordingly, when Backward Compatibility is considered, it is difficult to extend the configuration of the DRX-command MAC-CE.

Thus, a transmission unit 12 of a radio base station eNB is configured to, when transmitting the existing DRX-command MAC-CE to the mobile station UE, notify a mobile station UE of an instruction to interpret the DRX-command MAC-CE thereby to make an instruction to transition a reception state of the mobile station UE transitions to a Long-DRX state.

Here, the transmission unit 12 may notify such interpretation instruction through a PDCCH (Physical downlink Control Channel) (for example, it may notify it together with a PDCCH transmitting the DRX-command MAC-CE) or may notify the interpretation instruction by any message of a RRC layer, PDCP (Packet Data Convergence Protocol) layer, RLC (Radio Link Control) layer, or the like.

In other words, the transmission unit 12 may make an instruction to interpret a DRX-command MAC-CE, and then may use the DRX-command MAC-CE to make an instruction to transition the reception state of the mobile station UE to the Long-DRX state without transitioning it to the Short-DRX state can be made.

Also, a control unit 22 of the mobile station UE may determine that the reception state of the mobile station UE is instructed to transition to the Long-DRX state via the DRX-command MAC-CE when the instruction to interpret the DRX-command MAC-CE is made.

Described below by referring to Fig. 6 is an operation of the mobile station UE if the reception state of the mobile station UE according to Modification 1 is the continuous reception state and if the reception state of the mobile station UE is configured to be capable of transitioning to the Short-DRX state (in other words, the Short-DRX is configured).

As illustrated in Fig. 6, at step S201, the mobile station UE determines whether or not the DRX-command MAC-CE is received from the radio base station eNB.

In case of "Yes," the operation proceeds to step S202, while in case of "No," the operation is terminated.

At step S202, the mobile station UE determines whether or not the interpretation instruction is notified together with the DRX-command MAC-CE.

In case of "Yes," the operation proceeds to step S203, while in case of "No," the operation proceeds to step S204.

At step S203, the mobile station UE transitions the reception of the mobile station UE to the Long-DRX state without transitioning it to the Short-DRX state.

On the other hand, at step S204, the mobile station UE transitions the reception state of the mobile station UE to the Short-DRX state.

The features of the present embodiment may also be expressed as follows.

A first feature of the present embodiment is summarized as a mobile station UE, including: a control unit 22 configured to manage a reception state of the mobile station UE as any one of a continuous reception state, a Short-DRX state (first discontinuous reception state) in which discontinuous reception is performed in a first discontinuous reception cycle and a Long-DRX state (second discontinuous reception state) in which discontinuous reception is performed in a second discontinuous reception cycle which is a cycle longer than the first discontinuous reception cycle. Here, in a case where the reception state of the mobile station UE is managed as the continuous reception state, the control unit 22 transitions the reception state of the mobile station UE to the Short-DRX state when fulfillment of a first condition is detected. In a case where the reception state of the mobile station UE is managed as the Short-DRX state, the control unit 22 transitions the reception state of the mobile station UE to the Long-DRX state when fulfillment of a second condition is detected. Then, in a case where the reception state of the mobile station UE is managed as the continuous reception state, and even in a case where the reception state of the mobile station UE is configured to be capable of transitioning to the Short-DRX state, the control unit 22 transitions the reception state of the mobile station UE to the Long-DRX state without transitioning the reception state the Short-DRX state when an instruction to transition the reception state of the mobile station UE to the Long-DRX state is made via a MAC-CE (control element in a MAC layer) by a radio base station eNB.

In the first feature of the present embodiment, the MAC-CE is a DRX-command MEC-CE which is used to transition a mobile station UE to a DRX (discontinuous reception) state without having a payload. When an instruction to interpret the DRX-command MAC-CE (predetermined information) is made (when predetermined information related to a control element in the MAC layer is received), the control unit 22 may determine that an instruction to transition the reception state of the mobile station UE to the Long-DRX state is made via the DRX-command MAC-CE.

A second feature of the present embodiment is summarized as a radio base station eNB, including: a control unit 11 configured to be capable of transitioning a reception state of a mobile station UE among a continuous reception state, a Short-DRX state, and a Long-DRX state; and a transmission unit 12 configured to make an instruction via a MAC-CE to transition the reception state of the mobile station to the second discontinuous reception state without transitioning the reception state to the first discontinuous reception state, in a case where the reception state of the mobile station UE is the continuous reception state and in a case where the reception state of the mobile station UE is configured to be capable of transitioning to the Short-DRX state.

In the second feature of the present embodiment, the control unit 11 may determine whether or not to make the instruction based on at least one of traffic of the mobile station UE and a type of the mobile station UE.

With the above-described configuration, based on traffic of the mobile station UE, a type of the mobile station UE, or the like, the radio base station eNB can determine whether or not to transition the state of the mobile station UE to the Long-DRX state without transitioning to the Short-DRX state.

In the second feature of the present embodiment, the control unit 11 may determine whether or not to make the instruction based on information transmitted by the mobile station UE.

In the second feature of the present embodiment, the MAC-CE is a DRX-command MAC-CE. The transmission unit 12 may make an instruction to interpret the DRX-command MAC-CE (with predetermined information related to a control element in the MAC layer) thereby to make an instruction to transition the reception state of the mobile station UE to the Long-DRX state without transitioning it to the Short-DRX state.

With the above-described configuration, the radio base station eNB can determine whether or not to transition the reception state of the mobile station UE to the Long-DRX state without transitioning it to the Short-DRX state based on information from the mobile station UE and the like.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM) , a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station. Otherwise, the storage medium and the processor may be provided as discrete components inside the mobile station UE and the radio base station.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which is determined by the scope of claims. Therefore, the description of the specification is intended for illustrative explanation only.

### INDUSTRIAL APPLICABILITY

As described above, the invention can provide a mobile station and a radio base station which are capable of flexibly changing a DRX state of the mobile station UE.

### EXPLANATION OF REFERENCE NUMERALS

- eNB: radio base station
- UE: mobile station
- 11, 22: control unit
- 12: transmission unit
- 21: reception unit

## Claims

1. A mobile station (UE), comprising:
a control unit (22) configured to manage a reception state of the mobile station (UE) as any one of a continuous reception state, a first discontinuous reception state in which discontinuous reception is performed in a first discontinuous reception cycle and a second discontinuous reception state in which discontinuous reception is performed in a second discontinuous reception cycle which is a cycle longer than the first discontinuous reception cycle, wherein
in a case where the reception state of the mobile station (UE) is managed as the continuous reception state, the control unit (22) is configured to transition the reception state of the mobile station (UE) to the first discontinuous reception state when fulfillment of a first condition being an expiration of a drx-InactivityTimer is detected,
in a case where the reception state of the mobile station (UE) is managed as the first discontinuous reception state, the control unit (22) is configured to transition the reception state of the mobile station (UE) to the second discontinuous reception state when fulfillment of a second condition being an expiration of a Short DRX timer is detected,
the mobile station further comprising:
a reception unit (21) configured to receive a Media Access Control-Control Element, MAC-CE from a radio base station (eNB), and in a case where the reception state of the mobile station (UE) is managed as the continuous reception state, and even in a case where the reception state of the mobile station (UE) is configured to be capable of transitioning to the first discontinuous reception state, the control unit (22) is configured to transition the reception state of the mobile station (UE) to the second discontinuous reception state without transitioning the reception state to the first discontinuous reception state when an instruction to transition the reception state of the mobile station (UE) to the second discontinuous reception state is made via the MAC-CE by the radio base station (eNB).

2. The mobile station (UE) according to claim 1, wherein the MAC-CE is used for transitioning the mobile station (UE) to a discontinuous reception state, and
the control unit (22) is configured to determine that an instruction to transition the reception state of the mobile station (UE) to the second discontinuous reception state is made via the MAC-CE, when predetermined information related to the MAC-CE is received.

## Patentansprüche

1. Mobilstation (UE), umfassend:
eine Steuereinheit (22), die so ausgelegt ist, dass sie einen Empfangszustand der Mobilstation (UE) als einen aus einem kontinuierlichen Empfangszustand, einem ersten diskontinuierlichen Empfangszustand, bei dem diskontinuierlicher Empfang in einem ersten diskontinuierlichen Empfangszyklus durchgeführt wird, und einem zweiten diskontinuierlichen Empfangszustand, bei dem diskontinuierlicher Empfang in einem zweiten diskontinuierlichen Empfangszyklus durchgeführt wird, bei welchem es sich um einen Zyklus handelt, der länger ist als der erste diskontinuierliche Empfangszyklus, verwaltet, wobei
die Steuereinheit (22) so ausgelegt ist, dass sie in einem Fall, in dem der Empfangszustand der Mobilstation (UE) als der kontinuierliche Empfangszustand verwaltet wird, den Empfangszustand der Mobilstation (UE) auf den ersten diskontinuierlichen Empfangszustand umstellt, wenn die Erfüllung einer ersten Bedingung, bei der es sich um einen Ablauf eines drx-lnactivityTimers handelt, erkannt wird,
die Steuereinheit (22) so ausgelegt ist, dass sie in einem Fall, in dem der Empfangszustand der Mobilstation (UE) als der erste diskontinuierliche Empfangszustand verwaltet wird, den Empfangszustand der Mobilstation (UE) auf den zweiten diskontinuierlichen Empfangszustand umstellt, wenn die Erfüllung einer zweiten Bedingung, bei der es sich um einen Ablauf eines Short DRX-Timers handelt, erkannt wird,
wobei die Mobilstation weiter umfasst:
eine Empfangseinheit (21), die so ausgelegt ist, dass sie ein Medienzugriffssteuerungs-Steuerelement, Media Access Control-Control Element, MAC-CE, von einer Funkbasisstation (eNB) empfängt, und die Steuereinheit (22) so ausgelegt ist, dass sie in einem Fall, in dem der Empfangszustand der Mobilstation (UE) als der kontinuierliche Empfangszustand verwaltet wird, und selbst in einem Fall, in dem der Empfangszustand der Mobilstation (UE) so ausgelegt ist, dass er auf den ersten diskontinuierlichen Empfangszustand umstellen kann, den Empfangszustand der Mobilstation (UE) auf den zweiten diskontinuierlichen Empfangszustand umstellt, ohne den Empfangszustand auf den ersten diskontinuierlichen Empfangszustand umzustellen, wenn von der Funkbasisstation (eNB) über das MAC-CE eine Anweisung, den Empfangszustand der Mobilstation (UE) auf den zweiten diskontinuierlichen Empfangszustand umzustellen, gegeben wird.

2. Mobilstation (UE) nach Anspruch 1, wobei das MAC-CE verwendet wird, um die Mobilstation (UE) auf einen diskontinuierlichen Empfangszustand umzustellen, und
die Steuereinheit (22) so ausgelegt ist, dass sie bestimmt, dass über das MAC-CE eine Anweisung, den Empfangszustand der Mobilstation (UE) auf den zweiten diskontinuierlichen Empfangszustand umzustellen, gegeben wird, wenn vorbestimmte Informationen in Bezug auf das MAC-CE empfangen werden.

## Revendications

1. Station mobile (UE), comprenant:
une unité de commande (22) configurée pour gérer un état de réception de la station mobile (UE) comme étant un quelconque état parmi un état de réception continue, un premier état de réception discontinue dans lequel une réception discontinue est assurée dans un premier cycle de réception discontinue et un second état de réception discontinue dans lequel une réception discontinue est assurée dans un second cycle de réception discontinue qui est un cycle plus long que le premier cycle de réception discontinue, dans laquelle
dans le cas où l'état de réception de la station mobile (UE) est géré comme étant l'état de réception continue, l'unité de commande (22) est configurée pour faire passer l'état de réception de la station mobile (UE) au premier état de réception discontinue lorsqu'il est détecté qu'une première condition qui est une expiration d'un temporisateur d'inactivité de DRX est remplie,
dans le cas où l'état de réception de la station mobile (UE) est géré comme étant le premier état de réception discontinue, l'unité de commande (22) est configurée pour faire passer l'état de réception de la station mobile (UE) au second état de réception discontinue lorsqu'il est détecté qu'une seconde condition qui est une expiration d'un temporisateur de DRX courte est remplie,
la station mobile comprenant en outre :
une unité de réception (21) configurée pour recevoir un élément de commande de contrôle d'accès au support, MAC-CE, en provenance d'une station de base radio (eNB), et dans le cas où l'état de réception de la station mobile (UE) est géré comme étant l'état de réception continue, et même dans le cas où l'état de réception de la station mobile (UE) est configuré pour pouvoir passer au premier état de réception discontinue, l'unité de commande (22) est configurée pour faire passer l'état de réception de la station mobile (UE) au second état de réception discontinue sans faire passer l'état de réception au premier état de réception discontinue lorsqu'une instruction visant à faire passer l'état de réception de la station mobile (UE) au second état de réception discontinue est générée par la station de base radio (eNB) via le MAC-CE.

2. Station mobile (UE) selon la revendication 1, dans laquelle le MAC-CE est utilisé pour faire passer la station mobile (UE) à un état de réception discontinue, et
l'unité de commande (22) est configurée pour déterminer qu'une instruction visant à faire passer l'état de réception de la station mobile (UE) au second état de réception discontinue est générée via le MAC-CE, lorsque des informations prédéterminées concernant le MAC-CE sont reçues.
